# EUROPEAN PATENT APPLICATION

(11) **EP 1 669 856 A2**
(43) Date of publication of application: **14.06.2006**
(21) Application number: 05002309.2
(22) Date of filing: 03.02.2005
(51) Int. Cl.: G06F 9/44

(54) **Component-based software system**

(30) Priority: 15.03.2004 US 553162 P; 15.03.2004 US 553248 P; 15.03.2004 US 553247 P; 15.03.2004 US 553246 P; 16.03.2004 US 553467 P; 05.01.2005 US 29989
(71) Applicant: Ramco Systems Limited, Chennai, Tamilnadu 600 113 (IN)
(72) Inventor: Sundararajan, Parthasarathy, Ashok Nagar Chennai, 600 083 (IN); Jayaraman, Shyamala of "Rajeswari", Chennai 600 014 (IN); Sathiavageeswaran, Suresh Flat No. A1, Kottur Chennai 600 085 (IN); Rajaraman, Madusudanan, Vyasarnagar Chennai 600 039 (IN); Ramaswamy, Srinivasan Flat B, Ground Floor, Nagar Nanganallur Chennai 600 061 (IN); Meenakshisundaram, Krishnamoorthy, Abhiramapuram Chennai 600 018 (IN); Devalla, Raghuram, Adambakkam Chennai 600 088 (IN); Ponnaiah, Shanmugavel R., West Windsor, NJ 08550 (US); Krishnan, Natarajan, Sarathy Nagar Velachery Chennai 600 042 (IN)
(74) Representative: Clarke, Alison Clare

(57) **Abstract**

A method to independently test and develop a component (10) based software system. The method captures software specifications (50) of the system in a model. It then loads technical specifications of the components of the system into a code generation repository (60), and generates platform specific code (80) for the components. In a separate embodiment, the generated code is in a standalone format for ease of testing. In another embodiment, the generated code is integrated with one or more other components, thereby permitting integration testing. The method can be used, among other things, to produce user interfaces (200) that are standardized.

## Description

### Field of the Invention

The present invention relates to component-based software systems, and in particular, the development, testing, and deployment of such systems.

### Background of the Invention

In the current trend in software technology, a software component may be thought of as a self-contained unit that encapsulates and implements the behavior of a single function.

A complex software system for an organization that spans multiple business functions is normally made up of multiple components which need to interact with each other. For successful development and deployment of an efficient software system, it is important to be able to develop and test a component in a truly standalone, independent manner, separately test its integration with other components, and subsequently assemble and connect the interacting components together at the deployment stage.

The choice of technologies used to create software further complicates system development because of the lack of standard architectural or structural elements in describing software. Software components need fabrication and a certain amount of engineering every time a new application is created. Ironically, even though software is supposedly more malleable, it is electronic components that do not need any engineering to adopt them into an overall functionality.

To address some of these problems, generating code out of specifications has been attempted over the past couple of decades. In the past, the task of generating code out of specification has suffered from at least the following drawbacks. First, attempts to generate code for a logic model required extensive detail work at the specification level. This basically transferred the error prone details of development from the details of coding to the details of specification design. Second, even when specifications were used, there has been no standardization of the specification and/or the formal data structures that store and retrieve information. Third, the effort to synchronize specifications and models has been ineffective. Therefore, an issue is the lack of understanding of how to go about creating and managing specifications for software components in such a way that Code generation is possible.

A closely related issue to code generation is the packaging of the generated artifacts (i.e. executable code) for deployment. Currently, deployment packaging varies to a great extent depending on support technologies and the operating system, and packaging the artifacts out of the code generator is a major task in deploying the generated application. Presently, tools in the market are aligned to single support technology and do not cater to multiple support technologies.

Component-based software systems have user interfaces that link a user and the system. User interfaces may be a critical part of any software solution since the end user experiences the solution through the user interfaces. If the user interfaces are not standardized and uniformly similar, the resultant assembly may not have consistent usability in user interfaces.

On the technical level, user interface requirements for some applications can be very demanding. For example, it may be required to capture multiple line items for a document-based interface. This is achieved by using a grid control in the user interface. This is even more difficult when the application is Web based. Moreover, it may be required that the application be available on multiple platforms like Windows, UNIX, OS/400, etc., and that it also be available on a wide range of browsers and devices.

One problem with current grid control solutions however is that they are tied to either a particular platform or technology. It is desirable that a Web based control should provide rich user interface and ease of use. On the performance side, Web based applications should send as little data as possible over the Web. Because the grid control can hold hundreds of thousands of rows of data, sending all of them over the Web from the client browser to the Web server takes a great deal of time. Since the users are very much used to the fast desktop-based applications, slow Web based applications are not always acceptable.

### Summary of the Invention

The following description provides a detailed understanding of the invention by reference to some exemplary embodiments, to be understood in conjunction with the accompanying drawing. In one embodiment, the invention resides in a method comprising: capturing a software specification for a component in a model; loading technical specifications of said component into a code generation repository; and generating a platform-specific code for said component. In a modification, the invention resides in a method comprising: capturing a software specification in a software model; downloading said specification into a code generation repository; generating from said code generation repository a standalone schema of platform specific code for a component; unit testing said component; independently rolling out said component; downloading integration specifications for said component into said code generation repository; performing integration testing of interfaces of said component; and rolling out said integrated component and connecting said component with other components.

In another embodiment, the invention provides a computer readable medium comprising instructions available thereon for executing a method comprising: providing for capture of a software specification for a component in a model; facilitating loading technical specifications of said components into a code generation repository; and generating platform specific code for said component.

### Brief Description of the Drawings

FIG. 1 illustrates an example of a typical software component and its interfaces to other system entities.

FIG. 2 illustrates a diagrammatic form of a code generation process.

FIG. 3 illustrates an example of an interface used to collect user interface data.

FIG. 4 illustrates a standardized user interface.

FIG. 5 illustrates a computer system upon which the present invention can reside and operate.

### Detailed Description of Embodiments

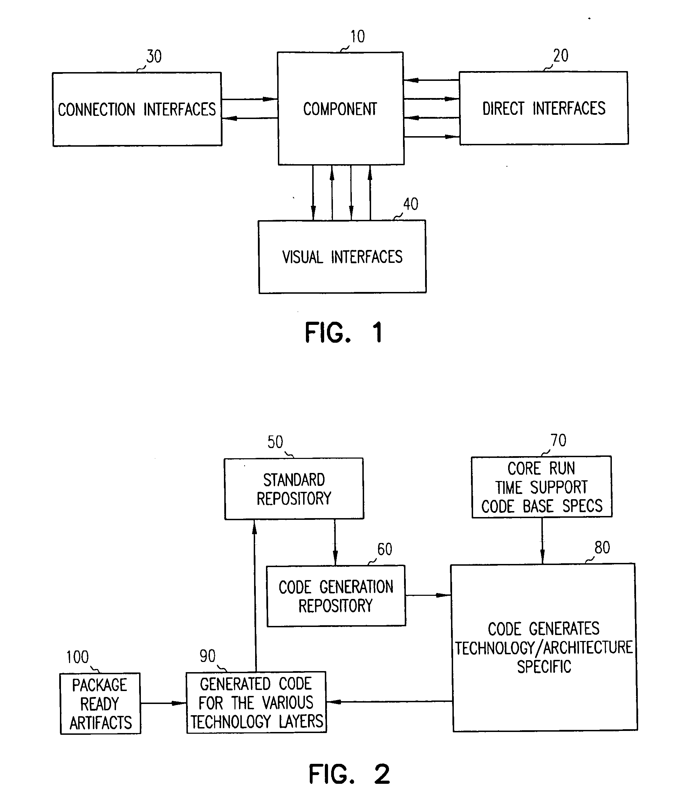

A detailed understanding of the invention may be had from the following description of exemplary embodiments, to be understood in conjunction with the accompanying drawings. In one embodiment of the invention, a component is defined as a self-contained software application that encapsulates and implements a single function. FIG. 1 illustrates a component-based system, where there may be several facets to a component. A component 10 has direct interfaces 20 that are invoked from external agents (inter-system). The component 10 also has connector interfaces 30 that are invoked by, or on behalf of, other components within this system (intra-system). Components also have visual interfaces 40 that are invoked from the standard interface devices such as clients and browsers. Within a component itself, there may be interface specification lists that define the structure of information supplied to and received by the component, internal data structures that are the schema for data persistence inside the component, interface behavior specifications that list the logic flow inside the component when an interface is invoked, and facilities to generate the resultant output on the related interfaces.

Such a component-based system provides several advantages. It provides the ability of tracing business processes in software implementations. Since the software component definition is well defined, reusability of code is possible. Additionally, because behavior transparency is present in component- based systems, identifying the engineering needs is somewhat easier. Moreover, direct interfaces implemented in suitable technology provide for inter-operability with systems, even those systems developed and deployed with conventional approaches. Similarly, the connector interfaces and specifications help in an independent production approach providing stub specifications for testability as an autonomous component. As a result of the preceding, categories of visual interfaces can be implemented in multiple technologies. Thus, a clear understanding of components, functionalities, and dependencies vis-à-vis information requirements is provided.

Another embodiment addresses the realm of multi-layered/multi-component Web based software systems, and provides an approach for independently developing and unit testing a component of an integrated business system without having the source and executable codes corresponding to the various other components with which this component interacts. This component can then be separately tested for integration requirements when the connector components themselves are available. In another embodiment, components are independently rolled out and then connected with their interacting components when they become available.

This particular embodiment adopts a model-driven approach to component development, i.e., the software specifications are captured in a model, and the model is then used to generate the code. The modeling elements for capturing the specifications include connector interfaces, interface specifications, and interface behavior specifications. Connector interfaces are the interfaces of the component through which it interacts with other components of the system. These interfaces can be between the user interfaces of the components (Web layer), the services of the components (Application layer), or the data structures of the components (Data layer). Interface specifications describe the structure of the information exchanged with the interacting components. Interface behavior specifications are the logic flow within the component when an interface is invoked and the resultant output to the related interfaces. Put together, these modeling elements describe the interactions of a component with other components of the system.

Once the specifications of a component are captured in the model, the construction phase is initiated. In this phase, a single component's technical specification is downloaded into a code generation repository. From this repository the technology platform-specific code for the component is generated. Two versions of the component's code are generated in a standalone manner and integrated. In the standalone version, all the connector interfaces are implemented through stubs. Standard stubs are implemented for each type of connection, and these stubs implement standard behavior. The integration version of the component code provides the actual implementation of the connector interfaces of the component. This version of the code can be generated when the technical specifications of the integrating components are completed.

FIG. 2 illustrates the code generation process. Specifically, one or more embodiments of the invention insure that standard representations of software specifications are available in standard repository Block 50. This helps in developing code generators in Block 60 with standard semantics for multiple technologies and technology usage selection options. In some embodiments of the invention however, code generation covers only the flow aspects of the processing, and leaves the logic pieces to be manually coded. After code generation, core runtime support is available in Block 70 that is specific to underlying technologies in Block 80, and the generated code is implemented over the various system technology layers in Block 90. And when there is an improvement or advance in underlying support technologies, the component-based design permits the changes that are needed to adapt to these improvements to be localized, leading to faster adoption without entire regeneration. Support is also available for integrated packaging leading to easier deployment of the generated artifacts. Lastly, an integrated change management process identifies the changed artifacts to be generated and deployed.

Information stored in the standard repository 50 supplies naming conventions and code generation related specification attributes. This is moved from the standard repository 50 to a specific code generation repository at 60. Code generators use the interfaces offered by standard runtime artifacts 100 for specific technologies and generate the artifacts into the different technology layers. The artifacts and the packaging scheme are technology dependent and are available in the specific code generation repository. A change management process specifies the list for code generation and the generation cycle is used to generate the specific artifacts. The unit of work at the code generation level is a component, and subsequent changes are at a lower granular level to avoid disruption of deployed artifacts.

In one embodiment, to actually deploy the invention, the following steps may be taken. The three main parts of a component that are captured are the connector interfaces, the interface specifications, and the interface behavior specification. First, the software specifications of components are captured in a software model. Second, the specification of a component is downloaded into a code generation repository. Third, the standalone version of the platform specific code for the component is generated from the code generation repository. Fourth, unit testing of the component is performed. Fifth, the component is independently rolled-out. Sixth, integrated specifications for this component are downloaded into the code generation repository. Seventh, integration testing of component interfaces is performed. Finally, integrating components are rolled out and connected with the component.

Expediently, this embodiment includes the ability to independently fabricate and test each component. Also, true unit testing can be practiced where the standalone version of the component is tested for internal behavior. The connector stubs ensure that the component does not break down because of the absence of the actual connecting code. That is, there is an independent deployment of components with stub implementation of interfaces. Thereafter, a separate integration testing phase is implemented where the integration version of a component is test deployed along with its connecting components and the connection interfaces. Then at deployment time, integrating components can be assembled and connected where the stub connectors of a component are transparently replaced with actual implementations.

The foregoing disclosure of software specifications, modeling, and code generation can be used in connection with user interface modeling to solve the problem of lack of standardization of user interfaces and to ensure consistency of user interfaces across a software system. Consequently, to ensure standardization and consistency, the user interface structure should be modeled and the user interface itself should be generated. Then the requirement of repeatability and consistency for user interface generation will be met.

To understand this embodiment of the invention, it is helpful to understand exactly what a user interface is. First, a user interface is a collection of data items that are laid out in a structured fashion. It can have a tabbed look and feel, which enables the user to group various sections of a document as tabs and enables the user to work on one section at a time. This ensures that the user views only those data that are relevant for the current operation and all the other related data are available at the click of a button. Each page (or screen) of a document is a collection of sections, and the positions of these sections are captured as logical coordinates within the page (screen). These positions do not normally correspond to the exact X/Y coordinates on the screen, as these will be arrived at during generation of the user interface layout.

Additionally, every section is a collection of user interface elements. The layout of these user interface elements within the sections is also captured as logical coordinates. These logical coordinates have their scope within the section, and this ensures that the user interface elements maintain their logical positioning irrespective of how the sections are positioned. This setup gives great control to the user interface engineer to concentrate on laying out controls within a section and then concentrating on how such sections are positioned in a page. Every section can then have command buttons that perform specific actions on user invocation. For the positioning of these buttons, they can be considered as any other user interface element and be positioned as required.

The traversal from one user interface to another user interface can be specified as traversal links. These links are special user interface links that can be positioned in any section. These links can also be superimposed on display only data items, which provide the end user with the capability of a Data-Specific Hyper Link

Every data set on a user interface screen with multiple elements can be specified as a grid. In one embodiment of the invention, a grid is treated as a single element for positioning in a section. This enables the layout of a section that is immune to any changes in the layout of such grids. Each grid can then have a set of user interface elements that repeat for every row of data. The positioning of the user interface elements in a grid follows the ordering of the user elements within a grid. Rendering of these elements is taken care of while generating the user interface.

Each of these user interface elements can have a set of sample data associated with them. These data will be used to fill the user interface when generated as a prototype. This enables the end user to have a feel of how the user interface would look and behave with data filled in. This approach also enables a user to have a feel of the functionality of the user interface with data relevant to the user's business. This prototype can be used for initial training and user acceptance from a user interface perspective.

Each of the elements in a section can have documentation associated with it. This will be displayed to the end user as a tool tip in the prototype that is generated from the system.

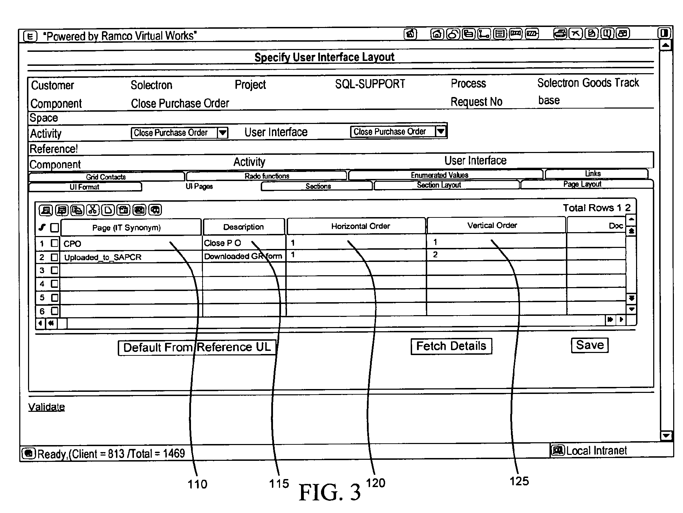

FIG. 3 illustrates an example of a typical look and feel of the application used to specify the user interface layout. In the example of FIG. 3, a user interface element is entered in the column at 110. A description of that element is input into the column at 115, and the placement of that element on the screen is dictated by the horizontal order 120 and the vertical order 125. A generator component analyzes these user interface layout elements and generates the user interface deliverable. This component can be configured to generate the user interface for various technologies and various users' needs.

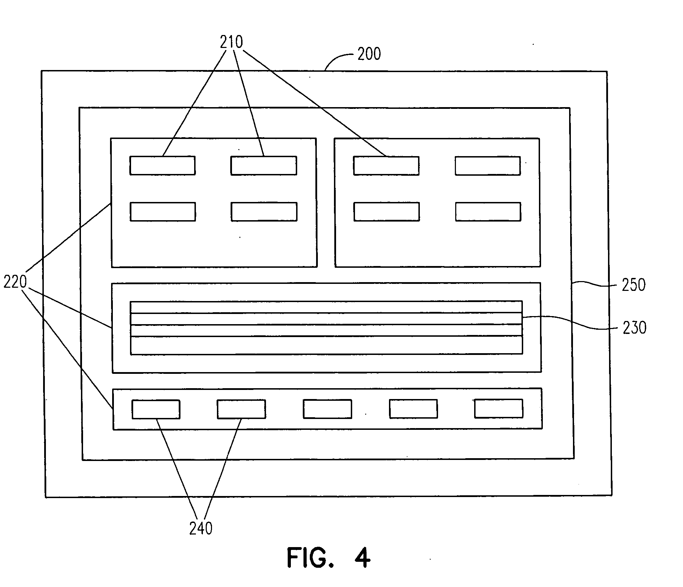

A user can generate the user interface for deployment on a variety of user interface methodologies. Examples of such methodologies include desktop based client server presentation, browser based HTML presentation, and mobile technology based WAP presentation. The user can generate the user interfaces for various purposes and uses such as user interface acceptance review, end user training, use in production, and use in internal design review. Additional versions of this generation are limited only by the need for new requirements and requires personalization of the generator component only. FIG. 4 illustrates an example of a standardized user interface produced by the application illustrated in FIG. 3. The user interface 200 has edit controls 210, sections 220, grid controls 230, task buttons 240, and page 250.

The foregoing method has many advantages for the various users of the user interface. First, there is a standardization of look and feel of the user interfaces across the entire system. Second, user interfaces can be delivered on various technologies, and user interfaces can be delivered to various users for various purposes. Third, the user interface layout is isolated from the actual deliverable interface and gives greater control to the designer of the user interface. Fourth, the ability to preview the user interface during the user interface layout process provides the designer with the ability to visualize how the end deliverable would actually look. Fifth, there is no longer a dependency on a highly skilled user interface designer, since the required data is modeled and available for further changes by any other designer. Finally, this is all made possible by well-documented translation semantics for various technologies and end user requirements.

Web applications, virtually all of which operate with user interfaces in a screen or page based environment, send data by submitting the entire web page. This gives a different look and feel to the application users because many application users are accustomed to desktop based applications which make a call to fetch data and refresh only the necessary controls. To solve this problem, the grid control in the invention gets or submits data using a hidden IFRAME, so that, there will not be a page refresh. This gives a traditional desktop-based look and feel on the Web browser. The grid control has a very rich user interface just like an ACTIVEX control. The grid has a row header, column header, vertical scrollbar and a horizontal scrollbar. The row header displays the row numbers, and the column header displays column heading, sort buttons and help button. The column heading text colors are different for mandatory columns and regular columns. Different background colors are used to differentiate editable and non-editable columns.

The grid control of the invention has two modes of operation, i.e., display mode, in which it displays the content as text, and edit mode. The grid places the cell in edit mode when a focus rectangle is over the cell and when the user presses an appropriate key, double clicks on the cell, or starts typing the data. When the cell goes into edit mode, the cell shows an appropriate control, like a combination box, text box or text area, based on the column data type. If the data type is date, then the user can either enter the date or choose it from the built-in calendar. After entering the data in a cell, if the user presses the enter key, control goes to the next editable cell and places that cell in edit mode. This gives the user the ability to enter data continuously without using navigation keys like arrow keys or the TAB key. Additionally, the grid control supports display only columns, text columns, numeric columns, text area columns, combination box columns and URL columns.

In one or more embodiments of the invention, the grid control is a pure HTML based editable grid control with a user interface that rivals traditional desktop based ACTIVEX grid controls. Since it is HTML based, it does not require any specific platform or browser, and it can be rendered on thin client devices like Pocket PCs. Moreover, since it is HTML based, it can be hosted on any Web server such as ASP, JSP, or ASPX, and no extra security setting is required on the client browser.

The grid control can be personalized, at runtime, for each application user. Each user can re-arrange the columns in the way he wants it. Similarly, users can change the width of the columns and height of the rows. The personalization information is persisted in the Web server for better performance.

Transferring huge chunks of data over the Web is a time consuming task, and it adds to the transaction execution time. Keeping this in mind, the grid control stores all its data in the Web server (until the user is ready to submit the transaction), and it transfers a limited number of rows back and forth between the client and the web server. For example, if an engineering order has 500 items and the engineering order screen grid control has 10 visible rows, the client buffer size would be 30 rows (default is 3 times the visible rows). If the user scrolls down beyond 30 rows, the grid control makes a request to the Web server in the background and displays the rows from the 31^{st} row onwards. This fetch is transparent to the user, and it is done through a Hidden IFRAME.

The grid control keeps track of the state of each row. For example, it tracks whether the row is fetched, inserted, modified or deleted. Based on this state, only modified rows are sent for transaction updates. This very much improves the performance, especially for the Web based applications.

The grid control comes with many useful features, like importing data from Excel and exporting data to Excel for further analysis. Data can be sorted using the sort buttons available on the column header. A search facility allows the user to search for a value on a column or on the entire grid. Similarly, insert row, delete row, cut and append rows, and copy and append rows are available for row based operations. The grid control provides a special column, with a check box, to enable the selection of rows for row based operations. The grid control has another feature called Zoom or Snapshot, in which the user can view one row of data in a dialog box. The Zoom feature is very useful when the grid has many columns to display and the user wants to see many of them without scrolling too much.

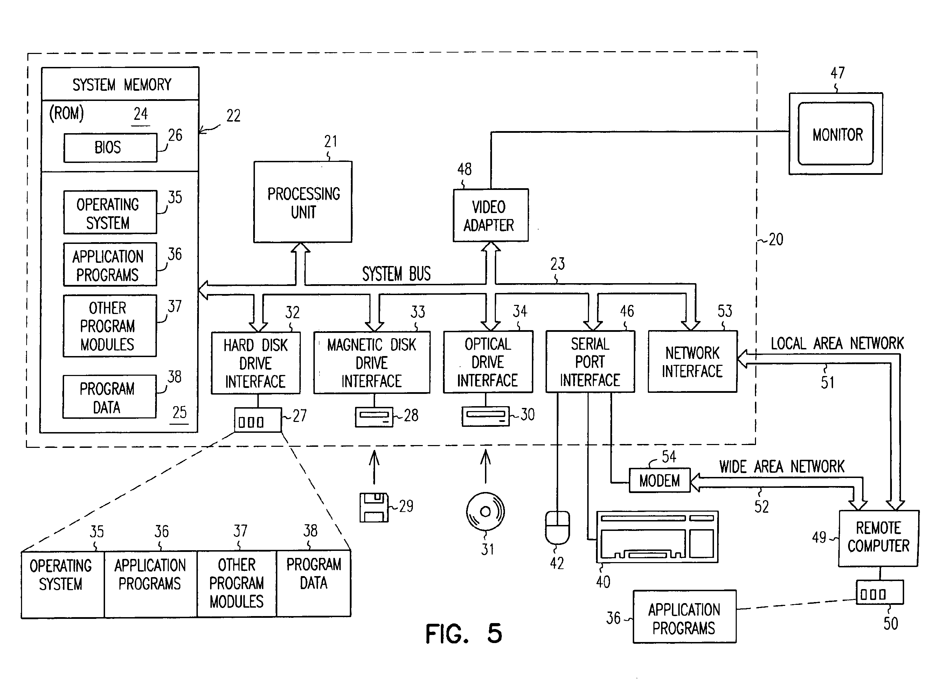

FIG. 5 illustrates an overview of a hardware and operating environment in conjunction with which embodiments of the invention may be practiced. The description of FIG. 5 provides a brief general overview of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/0 remote processing devices that are linked through a communications network. In a distributed computing environment, program modules may be located in both local and remote memory storage devices.

In the embodiment shown in FIG. 5, a hardware and operating environment is provided that is applicable to any of the servers and/or remote clients shown in the other Figures.

As shown in FIG. 5, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide nonvolatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

The computer 20 may operate in a networked environment using logical connections to one or more remote computers or servers, such as remote computer 49. These logical connections are achieved by a communication device that is coupled to or is part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 5 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSLs, OC-3 and/or OC-12, TCP/IP, microwave, wireless application protocol, and any other electronic media through any suitable switches, routers, outlets and power lines, as the same are known and understood by one of ordinary skill in the art.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of embodiments of the invention, with each claim standing on its own as a separate embodiment. It is understood that the above description is intended to be illustrative, and not restrictive. The above description is also intended to cover all alternatives, modifications and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

## Claims

1. A method comprising:
capturing a software specification for a component (10) in a model;
loading technical specifications of said component into a code generation repository (60); and
generating a platform specific code (90) for said component.

2. The method according to claim 1, further comprising generating model elements that describe interactions among components; providing connector interfaces among components; and, providing stubs to serve as connector interfaces (30) for testing.

3. The method according to claim 1, further comprising providing standard representations (50) of said software specification; and, providing formal data structures as a standard representation (50) of said software specification.

4. The method according to claim 1, further comprising the step of providing code generator repository (60) interacting with a code generator (80) and with standard semantics for multiple technologies that selectively generate process flows, the method further comprising steps wherein said code generator (80) uses interfaces offered by standard artifacts (100) for specific technologies and generates said artifacts into different technology layers (90).

5. The method according to claim 1, further comprising providing connector interfaces (30), interface specifications, and interface behavior specifications in said model, further comprising providing stubs within said platform specific code (90), thereby producing code that is standalone, providing a plurality of components that interact with each other, such that said platform specific code is integrated.

6. The method as in claim 1, wherein said step of generating comprises
generating from said code generation repository a standalone schema of platform specific code for a component; the method further including the steps of:
unit testing said component;
independently rolling out said component;
downloading integration specifications for said component into said code generation repository (60);
performing integration testing of interfaces of said component; and
rolling out said integrated component and connecting said component with other components.

7. The method according to claim 6, wherein said component (10) comprises a user interface, the method further comprising providing connector interfaces (30), interface specifications, and interface behavior specifications for said software specification, further comprising identifying code that has been altered, and generating and deploying said altered code, the method further comprising the step of using standard runtime artifacts for a specific technology, and generating said artifacts onto different technology layers.

8. The method as in claim 1, wherein said component (10) comprises a user interface in a model, the method further comprising: providing a grid (220,230) to specify multiple screen elements; and providing sample data associated with said multiple screen elements.

9. The method according to claim 8, wherein said generation of platform specific code comprises analyzing user interface layout elements and generating a deliverable user interface, further comprising using translation semantics for a platform specific technology; using an IFRAME to avoid a page refresh of said user interface; and providing a display mode and an edit mode for said grid (220, 230).

10. The method according to claim 8, wherein said grid (220, 230) comprises columns and rows, and further comprising providing a means to differentiate between editable and non-editable columns and rows, providing a user with the ability to re-arrange columns and rows, and providing a user with the ability to alter the width of columns and the height of rows.

11. The method according to claim 10, further comprising selectively tracking, fetching, inserting, modifying, or deleting a row; importing and exporting data to an external spreadsheet program; and, generating a user interface that permits a user to view a single row or column of data in a dialog box.

12. A computer readable medium comprising instructions available thereon for executing a method comprising:
capturing a software specification for a component (10) in a model;
loading technical specifications of said components into a code generation repository (60); and
generating platform specific code (90) for said component.

13. The computer readable medium comprising instructions available thereon as in claim 12, wherein the step of generating comprises generating from said code generation repository (60), a standalone schema of platform specific code for a component; the method further comprising the steps of:
unit testing said component;
independently rolling out said component;
downloading integration specifications for said component into said code generation repository;
performing integration testing of interfaces of said component; and
rolling out said integrated component and connecting said component with other components.

14. The computer readable medium comprising instructions available thereon as in claim 12, wherein said component (10) comprises a user interface (200) in a model.
